# EUROPÄISCHE PATENTSCHRIFT

(11) **EP 1 890 070 B1**
(45) Veröffentlichungstag und Bekanntmachung des Hinweises auf die Patenterteilung: **07.01.2015**
(21) Anmeldenummer: 07114262.4
(22) Anmeldetag: 13.08.2007
(51) Int. Cl.: F16L 47/00, F16L 47/18, F16L 37/10

(54) **Kupplungsanordnung**
Coupling assembly
Agencement de couplage

(30) Priorität: 14.08.2006 DE 102006037970
(43) Veröffentlichungstag der Anmeldung: 20.02.2008
(73) Patentinhaber: Gealan Formteile GmbH, 95145 Oberkotzau (DE)
(72) Erfinder: Pöhlmann, Thomas, 95233 Helmbrechts (DE); Schaller, Stefan, 95111 Rehau (DE); Saunus, Christian, 08223 Grünbach (DE)
(74) Vertreter: Fleuchaus, Michael A.

(56) Entgegenhaltungen:
- EP-A1- 0 135 082
- EP-A1- 1 672 265
- DE-U1- 9 214 858
- NL-A- 8 501 500

## Beschreibung

Die Erfindung bezieht sich auf eine Kupplungsanordnung für ein Leitungssystem mit einem Kupplungselement.

Es ist bekannt, in medienführenden Anlagen Kupplungsanordnungen zum Verbinden von Leitungssystemen einzusetzen. Durch die Verwendung der zur Kupplung medienführender Anlagen oder Systeme verwendeten Einzelteile oder standardisierten Kupplungssysteme ergeben sich folgende Probleme und Nachteile: Der Einsatz der medienführenden Anlagen oder Systeme ist ausschließlich auf standardisierte Bauräume und definierte Umgebungsbedingungen beschränkt. Die Anwendung dieser Systeme führt immer wieder dazu, dass verwendete oder verlorene Einzelteile im Servicefall durch einen Servicetechniker oder einen Laien mit nicht im Zubehör befindlichen Teilen ausgetauscht werden und diese in der Folge zu Undichtigkeiten oder zu Funktionsverlusten führen. Die im Medienkontakt befindlichen Teile, die mit zugelassenen Materialien hergestellt sind, zeigen für Verbindungsaufgaben teilweise erhebliche Festigkeitsschwächen. Bekannte Systeme aus dem Stand der Technik sind beispielsweise Schlauchkupplungen für Gartenschläuche in montierter Bauweise oder Metallkupplungssysteme für Luft.

Aus der DE 42 12 699 C1 ist ein Verfahren zur Herstellung von Kunststoffgegenständen bekannt, die aus mindestens zwei beweglich, insbesondere gelenkig, miteinander verbundenen Teilen aus dem gleichen Kunststoffmaterial bestehen. Dabei ist eines der Teile ein spritzgegossener Vorformling, dessen Verbindung mit dem mindestens einen weiteren Teil durch Spritzgießen in Overmoulding-Technik hergestellt wird. Das bekannte Verfahren ist dadurch gekennzeichnet, dass beim Herstellen des Vorformlings im Bereich seiner Kontaktfläche für die spätere Verbindung die Oberflächeneigenschaften dieser Kontaktfläche gegenüber den physikalischen Eigenschaften des anzuspritzenden weiteren Teils verändert werden, wobei die Änderung der Oberflächeneigenschaften zumindest solange aufrechterhalten wird, bis durch Spritzen und Erstarren des mindestens einen weiteren Teils die Verbindung erfolgt ist.

Die DE9214858U1 offenbart eine Rohrverbinndung für den drehbaren Anschluss eines Staubsaugerelements an das Saugrohr. Die EP1672265 offenbart eine Verbindungsanordnung für eine Fluidleitung, insbesondere zum Anschluss eines Schlauchs an eine Wasserzuleitung. Die EP0135082 schließlich betrifft eine Kupplungsanordnung mit schwenkbaren Rückhalteeinrichtungen.

Es ist die Aufgabe der Erfindung, eine Kupplungsanordnung zu schaffen, die wenigstens zwei zueinander unverlierbare Bestandteile aufweist.

Diese Aufgabe wird durch eine Kupplungsanordnung gemäß Anspruch 1 gelöst. Erfindungsgemäß ist dabei zur Fixierung des Kupplungselements mit dem Leitungsendstück eine Ausgestaltung vorgesehen, in der das Kupplungselement auf seiner Innenkontur einen nach innen vorspringenden Vorsprung aufweist, gegenüber dem das erste Leitungsendstück durch eine Nut auf der Außenkontur des ersten Leitungsendstücks in transversaler Richtung verschiebbar ist und bei der sich das erste Leitungsendstück durch eine Drehbewegung gegenüber dem Kupplungselement entlang einer an einem äußeren Ende des ersten Leitungsendstücks wendelförmig auf dessen Außenkontur verlaufenden Kontur, in der der Vorsprung führbar ist, fixieren lässt.

Die Erfindung bietet die Möglichkeit, funktionsbezogen, lokal und anwendungsspezifisch Kupplungssysteme für medienführende Anlage und/oder Systeme so herzustellen, dass im Einzelfall kompakte verliersichere und funktionssichere Einheiten entstehen.

Vorteilhafte Weiterbildungen der Erfindung ergeben sich aus den Unteransprüchen, der Beschreibung und den Zeichnungen.

Mit Vorteil lässt sich eine Kupplungsanordnung einsetzen, in der sich mittels des Kupplungselements ein zweites Leitungsendstück mit dem wenigstens einen ersten Leitungsendstück zusammenkuppeln lässt, insbesondere auf der dem ersten Leitungsendstück gegenüber dem Kupplungselement gegenüberliegenden Seite. Es versteht sich, dass die Kupplungsanordnung alternativ an ein Behältnis angeschlossen werden kann.

Die Bewegbarkeit des ersten Leitungsendstücks gegenüber dem Kupplungselement wird durch die geometrische Form der Berührungsflächen oder der in Berührung miteinander bringbaren Außenflächen des Kupplungselements und ersten Leitungsendstücks eingestellt. Diese Flächen bilden Gleitflächen, die derart gestaltet sind, dass der notwendige Spielraum für die Drehbarkeit bzw. das Lösen der beiden Bauteile zur Verfügung gestellt wird. Entsprechend den bevorzugten Ausführungsbeispielen ist solch eine Kontaktfläche bevorzugt schräg ausgestaltet, wobei die Längsbeweglichkeit der beiden Bauteile zueinander durch einen vorderen und einen hinteren Anschlag begrenzt wird.

In vorteilhafter Weise sind die Außenflächen oder der Berührungsflächen des Kupplungselements und des ersten Leitungsendstücks als schiefe Ebenen und/oder als gekrümmte Flächen ausgebildet.

Ein weiterer Aspekt der Erfindung besteht darin, dass das Leitungsendstück drehbeweglich in dem Kupplungselement gelagert ist. Hierbei lässt sich vorsehen, dass die Verschiebbarkeit des Leitungsendstücks gegenüber dem Kupplungselement durch vordere und/oder hintere Anschläge begrenzt ist.

Mit Vorteil wird das Leitungsendstück in einem von dem Kupplungselement gebildeten Gelenk gelagert, beispielsweise dadurch, dass das Kupplungselement eine Kugelgelenkpfanne für eine von dem Leitungsendstück gebildete Kugel bildet.

Mit Vorteil lässt sich vorsehen, dass das zwischen dem Kupplungselement und dem ersten Leitungsendstück vorhandene Spiel durch die Wahl des Materials, aus dem diese bestehen, und durch die Steilheit oder Form der Berührungsflächen oder der Außenflächen einstellbar ist. Vorzugsweise weist das Kupplungselement eine geschlossene Ringkontur auf, die das erste Leitungsendstück umgibt.

Von Vorteil ist eine Ausgestaltung der Kupplungsanordnung, bei der in einem zwischen dem Kupplungselement und dem ersten Leitungsendstück zulässigen Verschiebeweg wenigstens eine Sperre, insbesondere in der Form einer Schikanerippe oder einer Rasterung, vorgesehen ist.

Die in dem Leitungsendstück geführten Medien greifen durch ihre Aggressivität die Innenflächen des Rohrmaterials im Medienkontakt chemisch und/oder materialabtragend, d. h. abrasiv, an. Falls das fluide Medium Trinkwasser ist, muss gewährleistet sein, dass das sich in dem Trinkwasser auflösende oder lösende Rohrmaterial gesundheitlich unbedenklich ist und die Qualität des Trinkwassers nicht beeinflusst. Andererseits zeigen Materialien, die für den Kontakt mit Trinkwasser zugelassen sind, erhebliche Festigkeitsschwächen. Dies ist wegen der Aggressivität des Trinkwassers, insbesondere hervorgerufen durch den in ihm gelösten Sauerstoff, sehr problematisch. Dieser kann sich in den Kettenmolekülen von aus Kunststoff gebildeten Rohrleitungen anlagern und dadurch auf die Dauer den Kunststoff angreifen. Andererseits bricht irgendwann die Kunststoffleitung, was wegen des dauerhaften Fließens des zusätzlich unter Druck stehenden Wassers in dem Trinkwasserleitungssystem zu einem ständigen Herausfließen des Wassers an der Leckstelle und somit schnell zu einem erheblichen Schaden in dem Gebäude führt. Bei einem Trinkwassersystem ist auch zu berücksichtigen, dass das Trinkwasser auslaufseitig eine Temperatur von bis zu 65° C haben und einen Druck von bis zu 20 bar aufweisen kann.

Andere Probleme stellen sich etwa in Heizungsverteilersystemen, in denen Kupplungsanordnungen, wie oben beschrieben, zum Einsatz kommen. In der Regel weisen die Heizungsverteilersysteme geschlossene Kreisläufe auf, in denen dem in dem Kreislauf zirkulierenden Wasser eine Vielzahl von Additiven wie Entfrostungsmittel, beispielsweise Glykol, Teer, Öl und dgl. beigesetzt ist. Durch das Entfrostungsmittel wird ein Einfrieren und Platzen der Leitung verhindert, wenn die Temperatur von 0°C unterschritten wird. Teilweise enthalten die Additive Chlor, das freigesetzt werden kann und sich dann in dem Kunststoff einlagert. Beispielsweise wird Polyamid durch Chlor angegriffen. Dabei wird diese Reaktion durch die in dem Heizungswasser vorherrschende erhöhte Temperatur, die etwa im Bereich zwischen 60 und 80° C liegt, noch gefördert. Die Problematik wird noch erhöht durch den Druck, der in derartigen Heizungsumlaufsystemen besteht; dieser beträgt beispielsweise eingangsseitig 10 bar.

Infolge dessen ist erfindungsgemäß vorgesehen, dass das Kupplungselement und das wenigstens das erste Leitungsendstück von solchen Kunststoffmaterialien gebildet sind, die gegenüber dem jeweils in ihnen zu transportierenden Fluid chemisch inert sind.

In vorteilhafter Weise kommt insbesondere für das Leitungsendstück, aber auch für das Kupplungselement, ein duro- und/oder ein thermoplastischer Kunststoff zum Einsatz, insbesondere Polyphenylensulfid, Polypropylen, Poly-1-buten, Polyvinylchlorid, Polyvinylidenchlorid, Polymethyl-metaacrylat, Polyacrylnitril, Polystyrol, Polyacetal, Polyvinylalkohol, Polyvinylacetat, lonomere- oder Fluorkunststoff, Polyethylen, Polyamid, insbesondere ein teilaromatisches Polyamid, Polycarbonat, Polyester, Polyphenylenoxid, Polysulfon, Polyvinylacetal, Polyurethan, und chlorierter Polyether, Zellulosenitrat, Zelluloseacetat, Zelluloseether, Phenol-Harz, Harnstoff-Harz, Thioharnstoff-Harz, Melamin-Harz, Alkydharz, Allylharz, Silicon, Polyimid, Polybenzimidazol, Epoxidharz, Casein-Kunststoff, vernetztes Polyurthan, ungesättigtes Polyesterharz, Kombinationen hiervon und dergleichen.

Mit Vorteil wird dabei vorgesehen, dass wenigstens eines der Kunststoffmaterialien so gewählt ist, dass es gegen eine Temperaturwechselbeanspruchung durch wenigstens ein Fluid inert ist.

In vorteilhafter Weise zeichnet sich ein erfindungsgemäßes Bauelement dadurch aus, dass der Kunststoff, der wechselnden Temperaturen eines Fluids ausgesetztes Rohrleitungsstück bildet, entweder thermische Spannungen verkraftet oder im Bereich des Rohrleitungsstücks Elemente zum Ausgleich von Längenausdehnungen des Kunststoffs infolge einer erhöhten Temperatur aufweist.

Vorzugsweise wird wenigstens eines der Kunststoffmaterialien so gewählt, dass es gegen eine Druckwechselbelastung in dem Rohrleitungsstück, d. h. dem Leitungsendstück, oder dem Kupplungselement inert ist.

Als nützlich erweist es sich gemäß einer Weiterbildung der Erfindung auch, wenn das Leitungsendstück und das Kupplungselement auf ihrer Außenseite wenigstens bereichsweise von einem Kunststoff gebildet ist, der gegen eine in dem Bereich bestehende Temperatur-, Druck- oder Strahlungsbelastung oder eine Belastung durch eine chemisch aggressive Substanz inert ist.

Vorzugsweise lassen sich das Kupplungselement und das erste Leitungsendstück formschlüssig, kraftschlüssig und/oder verbundschlüssig miteinander verbinden. Insbesondere lässt sich eine erfindungsgemäße Kupplungsanordnung für den Transport von Trinkwasser einsetzen, wobei das Leitungsendstück innenseitig eine Auskleidung aus beispielsweise einem teilaromatischen Polyamid und außenseitig Polyamid aufweist.

Die oben anhand eines Leitungsendstücks beschriebenen Sachverhalte lassen sich auch auf jedes beliebige untrennbar an das Kupplungselement anschließbare Anschlusselement übertragen.

Wenn das Leitungsendstück hingegen für den Transport von Heizungswasser vorgesehen ist, weist es beispielsweise innenseitig eine Auskleidung aus Polyphenylsulfid und außenseitig ein zylinderförmiges Kunststoffstück aus Polypropylen auf.

Zur Erhöhung der Wärmeleitfähigkeit wird mit Vorteil vorgesehen, dass die Kunststoffwandungen einen wärmeleitenden Füllstoff, insbesondere Graphit oder Metallpartikel oder Mineralpartikel, enthalten.

In vorteilhafter Weise werden die oben beschriebenen Bauelemente, die jeweils zwei oder mehr Kunststoffe oder Kunststoffmischungen enthalten, in einem Spritzgussverfahren hergestellt, wobei ein Verbund durch Formschluss und/oder durch Materialschluss entsteht. Beispielsweise wird zunächst ein erster Kunststoff mit einem niedrigen Schmelzpunkt in eine Spritzgussform hineingegossen, anschließend wird der auszugießende Raum durch das Zurückziehen von Schiebern vergrößert und ein zweiter Kunststoff wird in den zusätzlich entstehenden Raum hineingegossen. Dabei weist beispielsweise der erste Kunststoff einen höheren Schmelzpunkt als der zweite Kunststoff auf, und der zweite Spritzvorgang erfolgt erst dann, wenn der erste Kunststoff ausreichend abgekühlt ist, so dass der erste Kunststoff durch den einfließenden zweiten Kunststoff nicht wieder angeschmolzen und verflüssigt wird. Dadurch wird ein fester Materialverbund zwischen den beiden Teilen, dem Kupplungselement, das um das Leitungsendstück herumgegossen wird, und letzteren verhindert. Wenigstens lassen sich beide Teile leicht wieder voneinander ablösen, so dass sie einen durch ihre Geometrie festgelegten Maximalabstand zueinander einnehmen können, sollten sie bei den aufeinanderfolgenden Spritzvorgängen miteinander vorübergehend verbunden worden sein. Durch die Erfindung wird somit eine Kupplungsanordnung für ein medienführendes, druckloses und/oder druckbeaufschlagtes Leitungssystem geschaffen, das sich durch den Einsatz eines einzigen Kunststoffs auszeichnet, falls bei den nacheinanderfolgenden Spritzvorgängen eine oberflächliche Trennung durch ein Trennmittel oder auf andere Weise möglich ist, oder das sich durch den Einsatz von Mehrkomponenten-Materialien auszeichnet, wobei immer das anwendungsgeeignete Material der jeweiligen Anforderung zugeordnet ist. Erfindungsgemäß wird ein aus wenigstens zwei oder mehr Komponenten aufgebautes Kupplungssystem geschaffen, das für ein medienführendes Leitungssystem eingesetzt wird, unabhängig davon, ob das Medium unter Druck steht. Das Kupplungssystem ist dadurch gekennzeichnet, dass durch die Kombination geometrischer Formen Teile eines mindestens zwei Komponenten aufweisenden spritzgegossenen Einzelteils beweglich miteinander verbunden sind und die beweglichen Teile verstellbare Kupplungselemente bilden. Dabei ist die Beweglichkeit der beiden Teile unabhängig von den Schwindungseigenschaften der verwendeten Kunststoffe im Kontaktbereich durch bestimmte geometrische Formen gegeben oder einstellbar.

Die Erfindung bezieht sich auch auf ein Spritzgießverfahren zum Herstellen einer Kupplungsanordnung, wie sie oben beschrieben wurde.

Beispielsweise lässt sich das Spritzgießverfahren auch auf einer Einkomponentenspritzgießmaschine ausführen, wenn mit einem einzigen Kunststoff eine drehbewegliche Kupplung hergestellt werden soll. Hierbei werden in zwei aufeinanderfolgenden Spritzvorgängen ein Grundkörper, etwa das Kupplungselement, und anschließend ein gegenüber diesem drehbewegliches Bauteil, das Leitungsendstück, gespritzt. Das Grundprinzip für die Erzeugung solcher drehbeweglicher Bauteile ist es, dass der Kunststoff des Grundkörpers nach dem ersten Spritzvorgang derart abkühlt, dass dessen Schmelztemperatur beim Anspritzen des zweiten Bauteils nicht mehr überschritten wird und somit eine Verbindung der Materialien aus den beiden Spritzvorgängen möglichst vollständig vermieden wird.

Besonders geeignet ist ein Spritzgießverfahren, bei dem in einem einzigen Prozessschritt wenigstens zwei sich wenigstens an ihren miteinander in Kontakt kommenden Oberflächen zueinander unverträgliche Kunststoffmaterialien in einer Spritzgießform vergossen werden.

Mit Vorteil lässt sich ein Spritzgießverfahren vorsehen, bei dem die Unverträglichkeit der Kunststoffmaterialien durch die Einstellung der Temperaturen an den Oberflächen der Kunststoffmaterialien, durch den Einsatz eines Trennmittels, durch das Einbringen eines Kältemittels oder durch das Aufbringen einer Isolierschicht erreicht wird.

Nachstehend wird die Erfindung in Ausführungsbeispielen anhand der Zeichnungen näher erläutert. Es zeigen:
- Fig. 1, 2: perspektivische Ansichten einer Kupplungsanordnung mit einem Kupplungselement und beidseitig eingebrachten Leitungsendstücken im unmontierten bzw. im montierten Zustand,
- Fig. 3, 4: Schnittansichten zu Fig. 1 bzw. Fig. 2 entlang einer Schnittlinie III - III bzw. einer Schnittlinie IV - IV,
- Fig. 5: einen Teilbereich X aus Fig. 4,
- Fig. 6, 7: eine Kupplungsanordnung mit einem Kupplungselement und einem einzigen Leitungsendstück, das untrennbar mit dem Kupplungselement verbunden ist, im unmontierten Zustand bzw. im montierten Zustand in Schnittansichten,
- Fig. 8, 9: perspektivische Draufsichten auf eine Kupplungsanordnung mit einem Kupplungselement und einem einzigen Anschlusselement, das untrennbar mit dem Kupplungselement verbunden ist
- Fig. 10, 11: Schnittansichten zu der Draufsicht aus Fig. 8 gemäß Schnittlinien X - X bzw. XI - XI und
- Fig. 12: ein Detail aus der Schnittansicht gemäß Fig. 11.

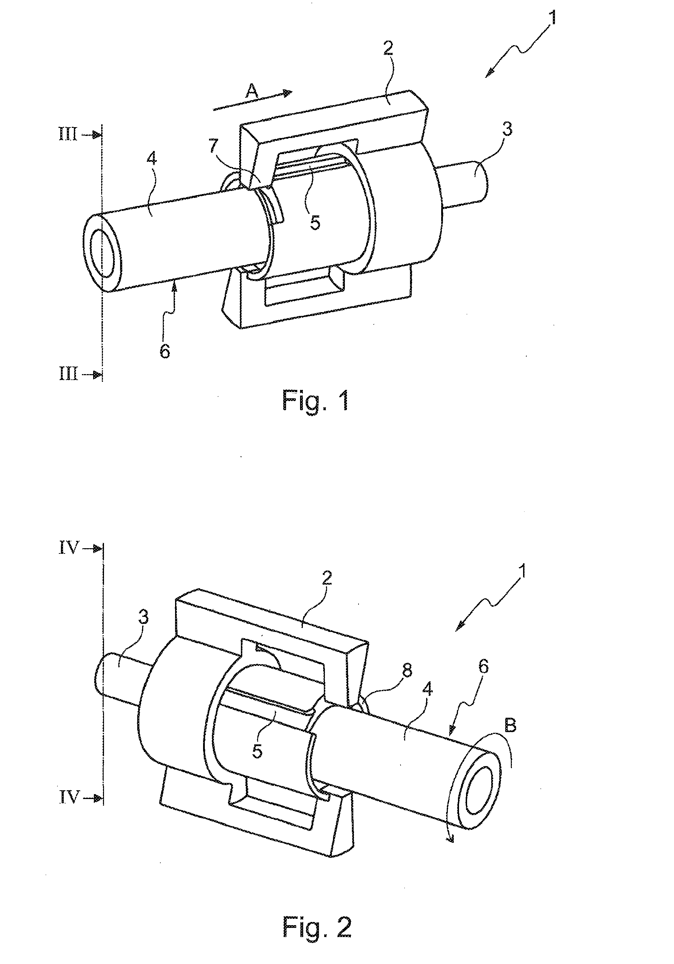

Eine Kupplungsanordnung 1 (Fig. 1, 2), die in einem Leitungssystem eingesetzt ist, umfasst ein Kupplungselement 2, ein mit diesem untrennbar verbundenes Leitungsendstück 3 und ein letzterem gegenüberliegend in das Kupplungselement 2 längs einer in seiner Außenwandung 4 eingebrachten Nut 5 einschiebbares Leitungsendstück 6.

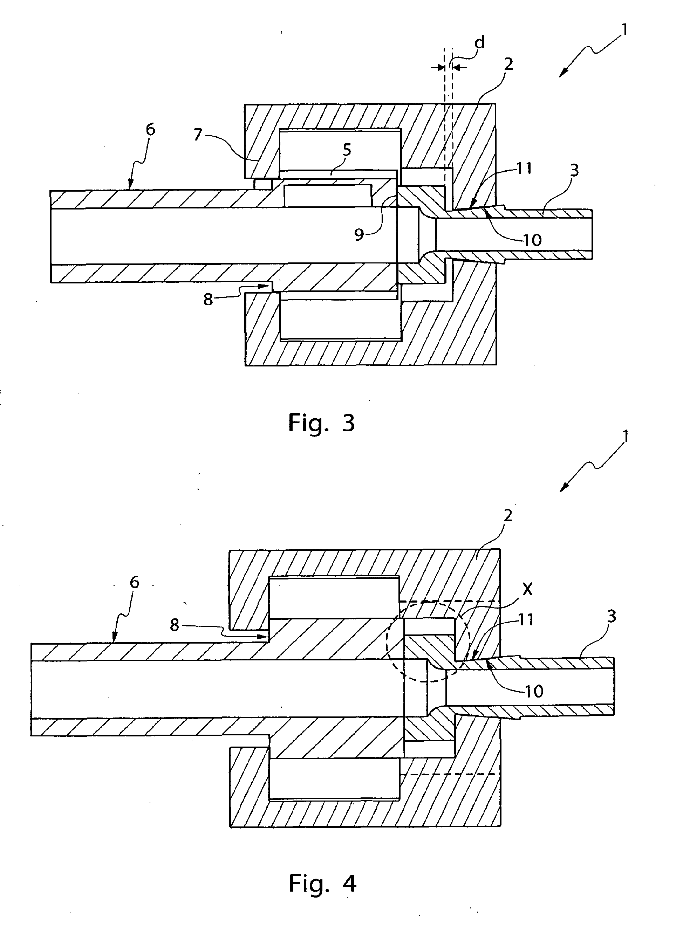

In die Nut 5 greift ein in Richtung zu dem Leitungsendstück 6 weisender Vorsprung 7 des Kupplungselements 2 ein, so dass das Leitungsendstück 6 während des Zusammenschiebens in Richtung eines Pfeils A entlang der Nut 5 geführt wird. Anschließend wird das Leitungsendstück 6, nachdem es in das Kupplungselement 2 hineingeführt ist, in Richtung eines Pfeils B gedreht. Dabei ist an der von dem Kupplungselement 2 abgewandten Stirnseite des Leitungsendstücks 6 eine wendelförmig verlaufende Kontur 8 vorgesehen, an der der Vorsprung 7 während der Drehbewegung in Richtung des Pfeils B entlangläuft, so dass das Leitungsendstück 6 noch entsprechend der Steigung der Kontur 8 gegen eine Stirnseite 9 (Fig. 3, 4) des Leitungsendstücks 3 oder - in alternativer Ausführung - gegen einen stirnseitigen Anschlag des Kupplungselements 2 gedrückt wird, um auf diese Weise eine flüssigkeitsdichte Verbindung zwischen den beiden Leitungsendstücken 3, 6 bzw. dem Kupplungselement 2 und dem Leitungsendstück 6 herzustellen.

Während das Leitungsendstück 6 mittels der Drehbewegung in Richtung des Pfeils B in das Kupplungselement 2 hineingedrückt wird, wird es gleichzeitig gegen die Stirnseite 9 des Leitungsendstücks 3 gedrückt, so dass dieses, wie das Leitungsendstück 6 in Richtung des Pfeils A verschoben und mit seiner konischen Zylinderaußenfläche 10 fest gegen eine konische Zylinderfläche 11 des Kupplungselements 2 gedrückt wird. So werden durch einen Drehvorgang, mit dem infolge der Steigung der Kontur 8 gleichzeitig eine Transversalbewegung in Richtung des Pfeils A verbunden ist, gleichzeitig die Stirnflächen der beiden Leitungsendstücke 3, 6 druckfest gegeneinander abgedichtet und ein Presssitz des Leitungsendstücks 3 in dem Kupplungselement 2 hergestellt.

Das Kupplungselement 2 und das Leitungsendstück 6 sind in einer Spritzform gemeinsam hergestellt. Sie sind geringfügig innerhalb eines Abstands d (Fig. 3) zueinander bewegbar, aber sie lassen sich vorzugsweise nicht zerstörungsfrei voneinander trennen. Aus Gründen der Kostenersparnis sind sie vorzugsweise beide aus demselben Kunststoff gespritzt, dabei wird während des Spritzvorgangs oder der Spritzvorgänge eine Ablösung von benachbarten Oberflächen des Kupplungselements 2 und des Leitungsendstücks 6 durch Maßnahmen erreicht, wie sie im Stand der Technik bekannt sind und beispielhaft in der DE 42 12 699 C1 beschrieben sind, deren Offenbarung hiermit in diese Patentanmeldung inkorporiert wird.

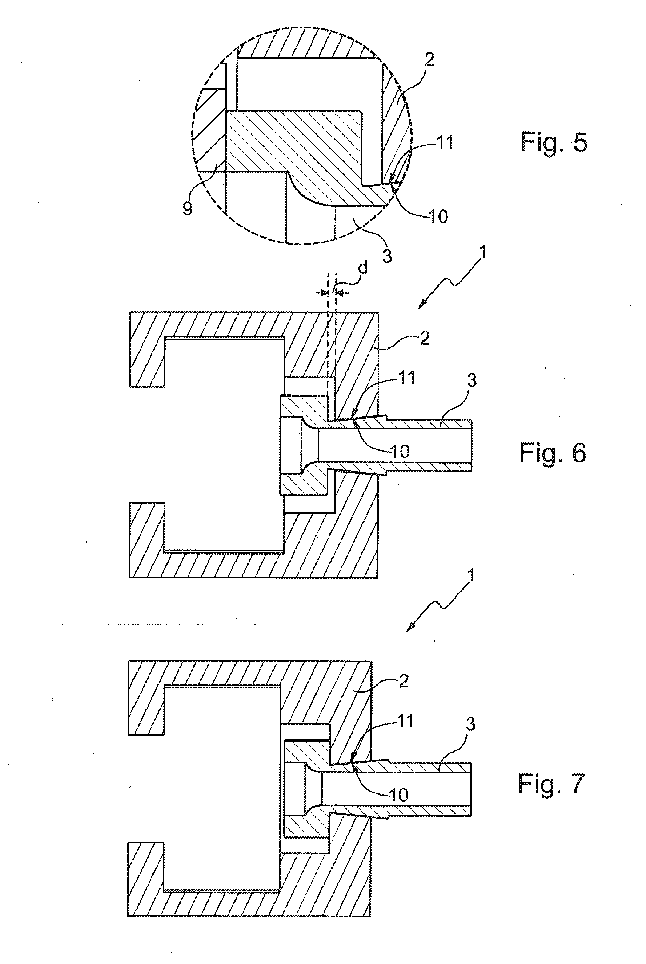

Fig. 6 und 7 zeigen, ähnlich wie Fig. 3 und 4, jedoch ohne das Leitungsendstück 6, die Kupplungsanordnung 1 mit dem noch nicht montierten Leitungsendstück 3 (Fig. 6) bzw. im montierten Zustand (Fig. 7).

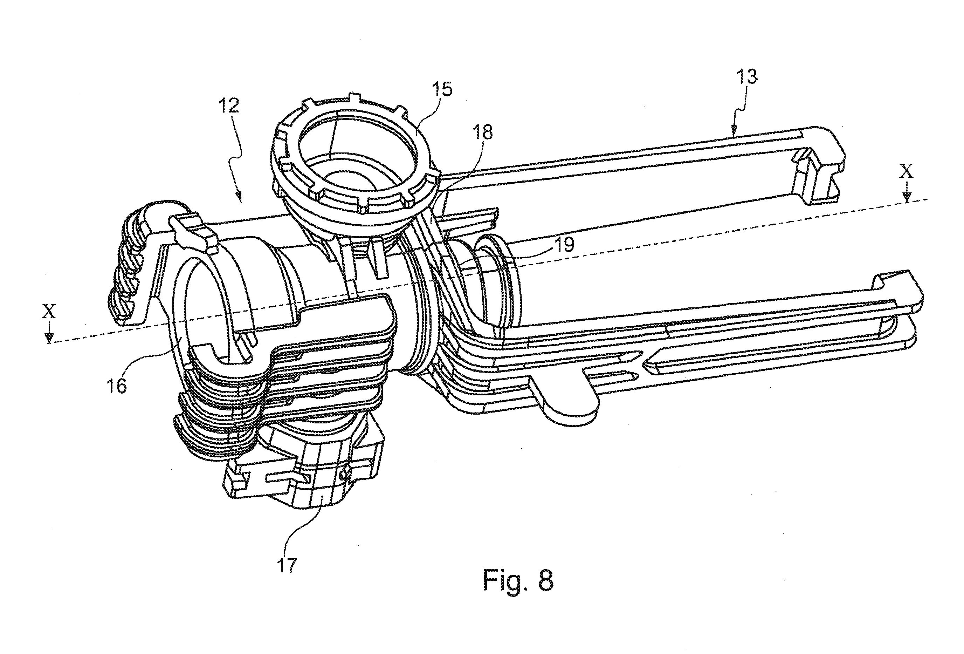

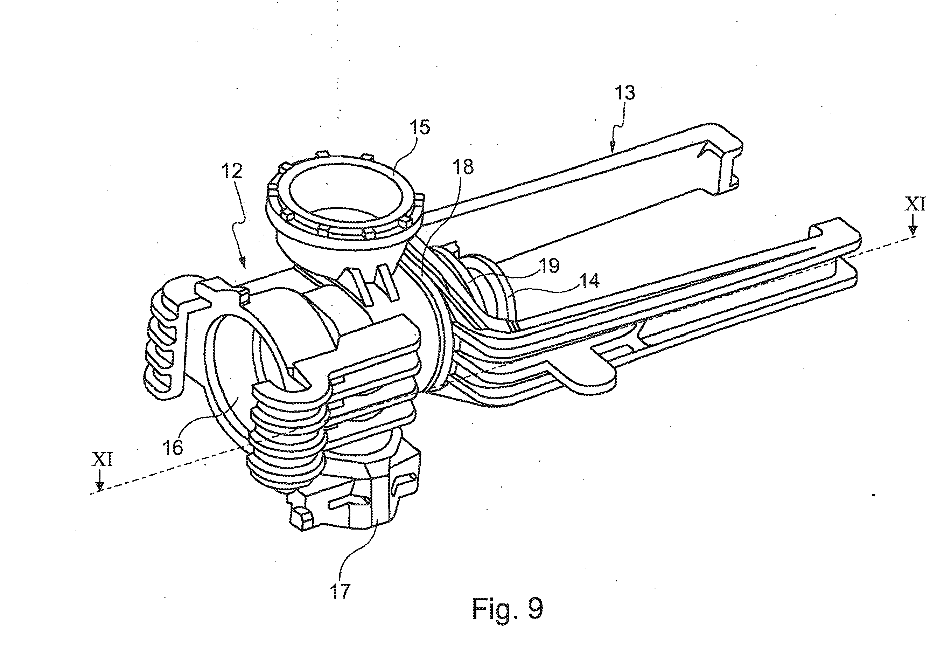

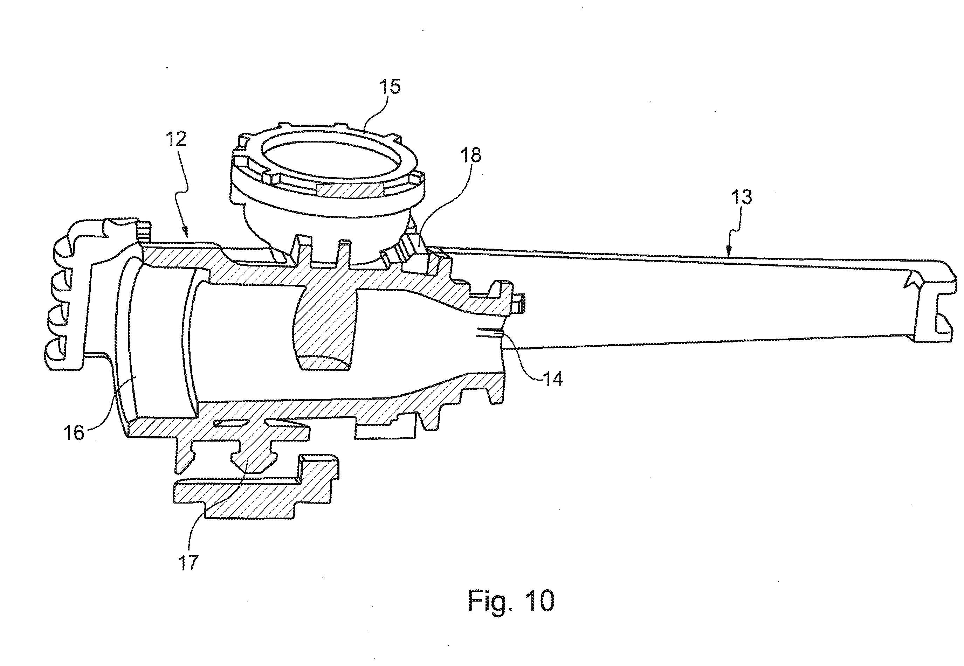

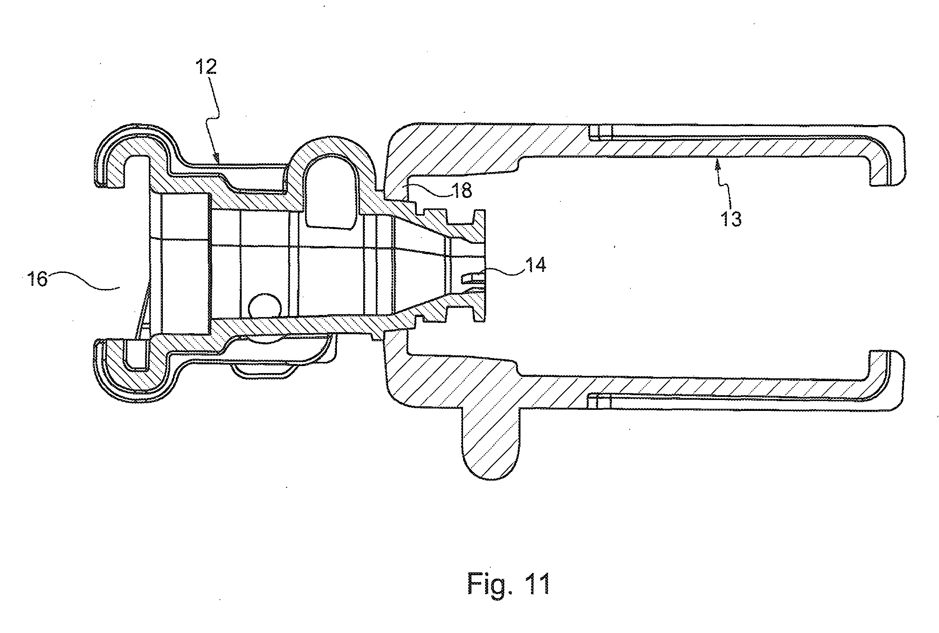

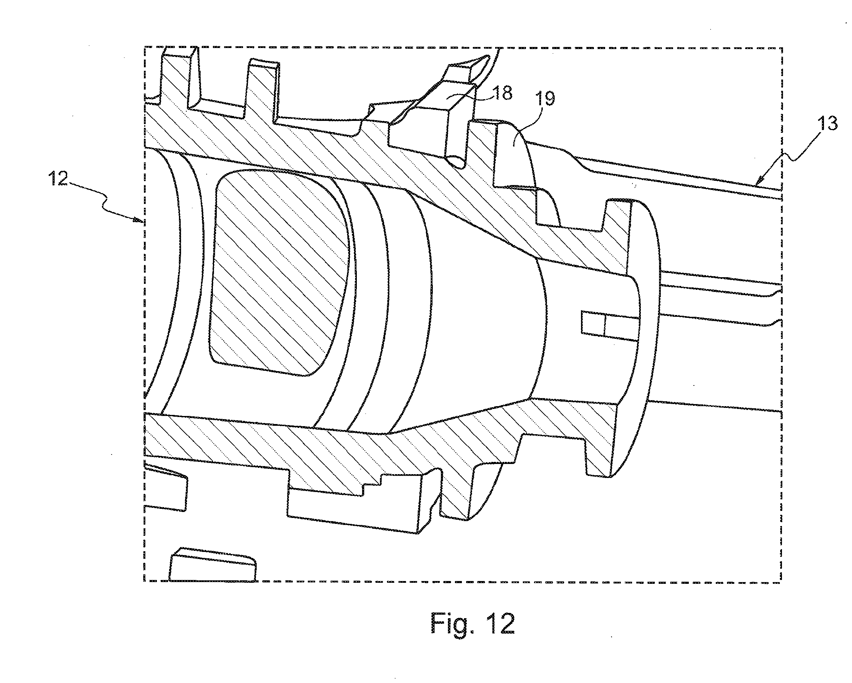

In einem anderen Ausführungsbeispiel trägt ein Kupplungselement 12 (Fig. 8 - 12) auf seiner Außenkontur ein Anschlusselement 13, das in etwa die Form eines U-förmig gebogenen Bügels aufweist. Das Anschlusselement 13 ist in derselben Weise wie das Leitungsendstück 3 gegenüber dem Kupplungselement 1 lösbar, jedoch untrennbar und damit unverlierbar, mit dem Kupplungselement 12 verbunden.

Das Kupplungselement 12 trägt Flansche 14, 15, 16, 17, die den Anschluss von Rohrstücken oder Leitungsendstücken in ähnlicher Weise gestatten, wie in Fig. 1 bis 7 dargestellt.

Das Anschlusselement 13 umgibt das Kupplungselement 12 mit einem eine kreisförmige Öffnung bildenden Anschluss 18. Das Kupplungselement 12 weist einen kreisförmigen Wulst oder einen Vorsprung 19 auf, der die unverlierbare Verbindung zwischen dem Anschlusselement 13 mit dem Kupplungselement 12 gewährleistet.

## Patentansprüche

1. Kupplungsanordnung (1) für ein Leitungssystem mit einem Kupplungselement (2, 12), wobei das Kupplungselement (2, 12) und wenigstens ein Anschlusselement (3, 13), insbesondere ein zu dem Leitungssystem gehöriges erstes Leitungsendstück (3), in einem einzigen Spritzgussprozess als zwei verschiedene, zueinander bewegliche, jedoch voneinander untrennbare Komponenten hergestellt sind, und wobei das Anschlusselement (3, 13), insbesondere das erste Leitungsendstück (3), gegenüber dem Kupplungselement (2, 12) in einer festen Position festlegbar ist
**dadurch gekennzeichnet, dass**
das Kupplungselement (2, 12) auf seiner Innenkontur einen nach innen vorspringenden Vorsprung (7) aufweist, gegenüber dem das erste Leitungsendstück (3) durch eine Nut (5) auf der Außenkontur (4) des ersten Leitungsendstücks in transversaler Richtung verschiebbar ist, und dass
das erste Leitungsendstück (3) durch eine Drehbewegung gegenüber dem Kupplungselement (2, 12) entlang einer an einem äußeren Ende des ersten Leitungsendstücks (3) wendelförmig auf dessen Außenkontur verlaufenden Kontur (8), in der der Vorsprung (7) führbar ist, fixierbar ist.

2. Kupplungsanordnung (1) nach Anspruch 1, **dadurch gekennzeichnet, dass** mittels des Kupplungselements (2, 12) ein zweites Leitungsendstück (6) mit dem wenigstens einen ersten Leitungsendstück (3) und/oder dem Kupplungselement (2, 12) kuppelbar ist, insbesondere auf der dem ersten Leitungsendstück (3) gegenüber dem Kupplungselement (2, 12) gegenüberliegenden Seite.

3. Kupplungsanordnung (1) nach Anspruch 1 oder 2, **dadurch gekennzeichnet, dass** die Bewegbarkeit des Anschlusselements (3, 13), insbesondere des ersten Leitungsendstücks (3), gegenüber dem Kupplungselement (2, 12) durch die geometrische Form der Berührungsflächen oder der in Berührung miteinander bringbaren Außenflächen des Kupplungselements (2, 12) und des Anschlusselements (3, 13), insbesondere des ersten Leitungsendstücks (3), einstellbar ist.

4. Kupplungsanordnung (1) nach Anspruch 3, **dadurch gekennzeichnet, dass** die Außenflächen oder die Berührungsflächen des Kupplungselements (2, 12) und des Anschlusselements (3, 13), insbesondere des ersten Leitungsendstücks (3), als schiefe Ebenen (10, 11) und/oder als gekrümmte Flächen ausgebildet sind.

5. Kupplungsanordnung (1) nach einem der Ansprüche 1 bis 4, **dadurch gekennzeichnet, dass** das zwischen dem Kupplungselement (2, 12) und dem Anschlusselement (3, 13), insbesondere dem ersten Leitungsendstück (3), vorhandene Spiel durch die Wahl des Materials, aus dem diese bestehen, und durch die Steilheit und/oder Form der Berührungsflächen und/oder der Außenflächen einstellbar ist.

6. Kupplungsanordnung (1) nach einem der vorhergehenden Ansprüche,
**dadurch gekennzeichnet, dass** das Kupplungselement (2, 12) eine geschlossene Ringkontur aufweist, die das erste Leitungsendstück (3) umgibt.

7. Kupplungsanordnung (1) nach einem der vorhergehenden Ansprüche,
**dadurch gekennzeichnet, dass** in einem zwischen dem Kupplungselement (2, 12) und dem Anschlusselement (3, 13), insbesondere dem ersten Leitungsendstück (3), zulässigen Verschiebeweg wenigstens eine Sperre, insbesondere in der Form einer Schikanerippe oder einer Rasterung, vorgesehen ist.

8. Kupplungsanordnung nach einem der vorhergehenden Ansprüche, **dadurch gekennzeichnet, dass** das Anschlusselement (3, 13), insbesondere das Leitungsendstück (3), drehbeweglich in dem Kupplungselement (2, 12) oder um dieses herum gelagert ist.

9. Kupplungsanordnung (1) nach einem der vorhergehenden Ansprüche,
**dadurch gekennzeichnet, dass** die Verschiebbarkeit des Anschlusselements (3, 13), insbesondere des Leitungsendstücks (3), gegenüber dem Kupplungselement (2, 12) durch vordere und/oder hintere Anschläge begrenzt ist.

10. Kupplungsanordnung (1) nach einem der vorhergehenden Ansprüche,
**dadurch gekennzeichnet, dass** das Anschlusselement (3, 13), insbesondere das Leitungsendstück (3), in einem von dem Kupplungselement (2, 12) gebildeten Gelenk gelagert ist.

11. Kupplungsanordnung (1) nach Anspruch 10, **dadurch gekennzeichnet, dass** das Kupplungselement (2, 12) eine Kugelgelenkpfanne für eine von dem Anschlusselement (3, 13), insbesondere dem Leitungsendstück (3), gebildete Kugel bildet.

12. Kupplungsanordnung (1) nach einem der vorhergehenden Ansprüche,
**dadurch gekennzeichnet, dass** das Kupplungselement (2, 12) und das Anschlusselement (3, 13), insbesondere wenigstens das erste Leitungsendstück (3), von solchen Kunststoffmaterialien gebildet sind, die gegenüber dem jeweils in ihnen zu transportierenden Fluid chemisch inert sind.

13. Kupplungsanordnung (1) nach Anspruch 12, **dadurch gekennzeichnet, dass** der Kunststoff ein duro- und/oder thermoplastischer Kunststoff ist, insbesondere Polyphenylensulfid, Polypropylen, Poly-1-buten, Polyvinylchlorid, Polyvinylidenchlorid, Polymethyl-metaacrylat, Polyacrylnitril, Polystyrol, Polyacetal, Polyvinylalkohol, Polyvinylacetat, lonomere- oder Fluorkunststoff, Polyethylen, Polyamid, insbesondere ein teilaromatisches Polyamid, Polycarbonat, Polyester, Polyphenylenoxid, Polysulfon, Polyvinylacetal, Polyurethan, und chlorierter Polyether, Zellulosenitrat, Zelluloseacetat, Zelluloseether, Phenol-Harz, Harnstoff-Harz, Thioharnstoff-Harz, Melamin-Harz, Alkydharz, Allylharz, Silicon, Polyimid, Polybenzimidazol, Epoxidharz, Casein-Kunststoff, vernetztes Polyurthan, ungesättigtes Polyesterharz, Kombinationen hiervon und dergleichen.

14. Kupplungsanordnung (1) nach Anspruch 12 oder 13, **dadurch gekennzeichnet, dass** wenigstens eines der Kunststoffmaterialien so gewählt ist, dass es gegen eine Temperaturwechselbeanspruchung durch ein Fluid inert ist.

15. Kupplungsanordnung (1) nach einem der vorhergehenden Ansprüche,
**dadurch gekennzeichnet, dass** der Kunststoff, der ein wechselnden Temperaturen eines Fluids ausgesetztes Anschlusselement (3, 13) oder Leitungsendstück (3) bildet, entweder thermische Spannungen verkraftet oder im Bereich des Leitungsendstücks (3) Elemente zum Ausgleich von Längenausdehnungen des Kunststoffs infolge einer erhöhten Temperatur aufweist.

16. Kupplungsanordnung (1) nach einem der vorhergehenden Ansprüche,
**dadurch gekennzeichnet, dass** wenigstens eines der Kunststoffmaterialien so gewählt ist, dass es gegen eine Druckwechselbelastung in dem wenigstens einen Leitungsendstück (3) inert ist.

17. Kupplungsanordnung (1) nach einem der vorhergehenden Ansprüche,
**dadurch gekennzeichnet, dass** das Anschlusselement (3, 13), insbesondere das wenigstens eine Leitungsendstück (3), auf seiner Außenseite wenigstens bereichsweise von einem Kunststoff gebildet ist, der gegen eine in dem Bereich bestehende Temperatur-, Druck- oder Strahlungsbelastung oder eine Belastung durch eine chemisch aggressive Substanz inert ist.

18. Kupplungsanordnung (1) nach einem der vorhergehenden Ansprüche,
**dadurch gekennzeichnet, dass** das Kupplungselement (2, 12) und das Anschlusselement (3, 13), insbesondere das erste Leitungsendstück (3), formschlüssig, kraftschlüssig und/oder verbundschlüssig miteinander verbindbar sind.

19. Spritzgießverfahren zum Herstellen eines Bauelements nach einem der Ansprüche 1 bis 18.

20. Spritzgießverfahren nach Anspruch 19, **dadurch gekennzeichnet, dass** der Mehrkomponentenspritzgießprozeß auf einer Einkomponentenspritzgießmaschine ausgeführt wird.

21. Spritzgießverfahren nach Anspruch 19 oder 20, **dadurch gekennzeichnet, dass** in einem einzigen Prozessschritt wenigstens zwei sich, wenigstens an ihren miteinander in Kontakt kommenden Oberflächen zueinander im Wesentlichen unverbindbaren Kunststoffmaterialien in einer Spritzgießform vergossen werden.

22. Spritzgießverfahren nach einem der Ansprüche 19 bis 21, **dadurch gekennzeichnet, dass** die im Wesentlichen Unverbindbarkeit durch die Einstellung der Temperaturen an den Oberflächen der Kunststoffmaterialien, durch den Einsatz eines Trennmittels und/oder durch das Einbringen eines Kältemittels und/oder durch das Aufbringen einer Isolierschicht und/oder durch die Verwendung unterschiedlicher Materialien erreicht wird.

23. Spritzgießverfahren nach einem der Ansprüche 19 bis 22, **dadurch gekennzeichnet, dass** in einem einzigen Prozessschnitt wenigstens zwei Kunststoffe in einer Spritzgießform verarbeitet werden.

## Claims

1. A coupling assembly (1) for a line system, said coupling assembly comprising a coupling element (2, 12), wherein the coupling element (2,12) and at least one connection element (3, 13), in particular a first line end piece (3) associated with the line system, are manufactured in a single injection-molding process as two different components which are movable relative to one another but inseparable from each other, and wherein the connection element (3,13), in particular the first line end piece (3), can be locked in a fixed position relative to the coupling element (2, 12),
**characterized in that**
the coupling element (2,12) has on its inner contour an inwardly projected projection (7) relative to which the first line end piece (3) is displaceable in a transverse direction through a groove (5) on the outer contour (4) of the first line end piece, and **in that**
the first line end piece (3) can be fixed in place by a rotary motion relative to the first coupling element (2, 12) along a contour (8) which extends helically at an outer end of the first line end piece (3) on the outer contour of the latter, and in which the projection (7) can be guided.

2. The coupling assembly (1) of claim 1, **characterized in that** by means of the coupling element (2, 12) a second line end piece (6) can be coupled to the at least one first line end piece (3) and/or the coupling element (2, 12), in particular on the side located opposite the first line end piece (3) relative to the coupling element (2, 12).

3. The coupling assembly (1) of claim 1 or 2, **characterized in that** the movability of the connection element (3, 13), in particular of the first line end piece (3), relative to the coupling element (2, 12) can be set by the geometric shape of the contact surfaces, or of the outer surfaces which can be contacted with each other, of the coupling element (2, 12) and the connection element (3, 13), in particular of the first line end piece (3),

4. The coupling assembly (1) of claim 3, **characterized in that** the outer surfaces or the contact surfaces of the coupling element (2,12) and of the connection element (3,13), in particular of the first line end piece (3), are designed as inclined planes (10, 11) and/or as curved surfaces,

5. The coupling assembly (1) of any of claims 1 to 4, **characterized in that** the play existing between the coupling element (2, 12) and the connection element (3,13), in particular the first line end piece (3), can be set by the choice of material from which they are made, and by the gradient and/or shape of the contact surfaces and/or of the outer surfaces.

6. The coupling assembly (1) of any preceding claim, **characterized in that** the coupling element (2,12) has a closed annular contour surrounding the first line end piece (3).

7. The coupling assembly (1) of any preceding claim, **characterised in that** there is at least one blocking device, in particular in the form of a baffle rib or a detent, provided in a displacement path that is admissible between the coupling element (2, 12) and the connection element (3, 13), in particular the first line end piece (3).

8. The coupling assembly of any preceding claim, **characterized in that** the connection element (3,13), In particular the line end piece (3), is rotatably supported in or about the coupling element (2, 12),

9. The coupling assembly (1) of any preceding claim, **characterized in that** the displaceability of the connection element (3,13), in particular of the line end piece (3), relative to the coupling element (2, 12) is limited by front and/or rear stops.

10. The coupling assembly (1) of any preceding claim, **characterized in that** the connection n element (3,13), in particular the line end piece (3), is supported in a joint formed by the coupling element (2,12).

11. The coupling assembly (1) of claim 10, **characterized in that** the coupling element (2, 12) forms a ball joint socket for a ball formed by the connection element (3, 13), in particular the line end piece (3).

12. The coupling assembly (1) of any preceding claim, **characterized in that** the coupling element (2, 12) and the connection element (3, 13), in particular at least the first line end piece (3), are formed by plastic materials which are chemically inert to the fluid to be transported in them in each case.

13. The coupling assembly (1) of claim 12, **characterised in that** the plastic material is a duroplastic and/or thermoplastic material, in particular polyphenylene sulfide, polypropylene, poly-1-butene, polyvinyl chloride, polyvinylidene chloride, polymethyl metaacrylate, polyacrylonitrile, polystyrene, polyacetal, polyvinyl alcohol, polyvinyl acetate, ionomers or fluoroplastics, polyethylene, polyamide, in particular a partially aromatic polyamide, polycarbonate, polyester, polyphenylene oxide, polysulfone, polyvinyl acetal, polyurethane, and chlorinated polyether, cellulose nitrate, cellulose acetate, cellulose ether, phenolic resin, urea resin, thiourea resin, melamine resin, alkyd resin, allyl resin, silicone, polyimide, polybenzimidazole, epoxy resin, casein plastic, cross-linked polyurethane, unsaturated polyester resin, combinations thereof, and the like.

14. The coupling assembly (1) of claim 12 or 13, **characterized in that** at least one of the plastic materials is selected to be inert to varying thermal strains caused by a fluid.

15. The coupling assembly (1) of any preceding claim, **characterized in that** the plastic forming a connection element (3,13) or line end piece (3) which is subjected to varying temperatures of a fluid either is resistant to thermal stresses or includes elements in the region of the line end piece (3) for compensating for longitudinal extension of the plastic caused by an increased temperature.

16. The coupling assembly (1) of any preceding claim, **characterized in that** at least one of the plastic materials is selected to be inert to a varying pressure load in the at least one line end piece (3).

17. The coupling assembly (1) of any preceding claim, **characterized in that** the connection element (3,13), in particular the at least one line end piece (3), is formed on its outer side at least in regions by a plastic which is inert to a thermal, pressure or radiation load existing in the region, or to exposure to a chemically aggressive substance,

18. The coupling assembly (1) of any preceding claim, **characterized in that** the coupling element (2, 12) a nd the connection element (3, 13), in particular the first line end piece (3), are connectable to each other by positive engagement, frictional engagement and/or material bonding.

19. An injection-molding process for producing a component according to any of claims 1 to 18.

20. The injection-molding process of claim 19, **characterized in that** the multi-component injection molding process is carried out on a single-component injection molding machine.

21. The injection-molding process of claim 19 or 20, **characterized in that** at least two plastic materials which are essentially non-connectable to one another at least at the surfaces which contact each other are molded in an injection mold in a single process step.

22. The injection-molding process of any of claims 19 to 21, **characterised in that** the essential non-connectability is achieved by setting the temperatures at the surfaces of the plastic materials, by employing a separating agent and/or by adding a cryogenic agent and/or by applying an insulating layer and/or by using different materials.

23. The injection-molding process of any of claims 19 to 22, **characterized in that** at least two plastics are processed in an injection mold in a single process step.

## Revendications

1. Disposition de couplage (1) destinée à un système de conduites avec un élément de couplage (2, 12), l'élément de couplage (2, 12) et au moins un élément de raccordement (3, 13), notamment un premier embout de conduite (3) associé au système de conduite, étant fabriqués comme deux composants différents et mobiles l'un par rapport à l'autre mais inséparables l'un de l'autre lors d'un procédé unique de moulage par injection et l'élément de raccordement (3, 13), notamment le premier embout de conduite (3) étant déterminable dans une position fixe par rapport à l'élément de couplage,
**caractérisée en ce que**
l'élément de couplage (2, 12) présente sur son contour intérieur une proéminence (7) en saillie vers l'intérieur, face à laquelle le premier embout de conduite (3) est mobile à travers une goujure (5) sur le contour extérieur (4) du premier embout de conduite en direction transversale, et **en ce que** le premier embout de conduite (3) est fixable par un mouvement de rotation face à l'élément de couplage (2, 12) le long d'un contour (8) dans lequel la proéminence (7) est guidable, se produisant sur une extrémité extérieure du premier embout de conduite (3) en forme hélicoïdale et sur le contour extérieur de celui-ci.

2. Disposition de couplage (1) selon la revendication 1, **caractérisée en ce que**, au moyen de l'élément de couplage (2, 12), un second embout de conduite (6) est accouplable avec au moins un premier embout de conduite (3) et/ou l'élément de couplage (2, 12), notamment sur le côté faisant face au premier embout de conduite (3) en face de l'élément de couplage (2, 12).

3. Disposition de couplage (1) selon les revendications 1 ou 2, **caractérisée en ce que** la mobilité de l'élément de raccordement (3, 13), notamment du premier embout de conduite (3), est réglable face à l'élément de couplage (2, 12) par la forme géométrique des surfaces de contact ou des surfaces extérieures de l'élément de couplage (2, 12) et de l'élément de raccordement (3, 13) mettables en contact l'une avec l'autre, notamment du premier embout de conduite (3).

4. Disposition de couplage (1) selon la revendication 3, **caractérisée en ce que** les surfaces extérieures ou les surfaces de contact de l'élément de couplage (2, 12) et de l'élément de raccordement (3, 13), notamment du premier embout de conduite (3), sont agencées comme plans obliques (10, 11) et/ou comme surfaces bombées.

5. Disposition de couplage (1) selon une quelconque des revendications 1 à 4, **caractérisé en ce que** le jeu existant entre l'élément de couplage (2, 12) et l'élément de raccordement (3, 13), notamment le premier embout de conduite (3) est ajustable par le choix du matériau dont ceux-ci sont composés et par la pente et/ou la forme des surfaces de contact et/ou des surfaces extérieures.

6. Disposition de couplage (1) selon une quelconque des revendications précédentes, **caractérisée en ce que** l'élément de couplage (2, 12) présente un contour annulaire fermé, qui entoure le premier embout de conduite (3).

7. Disposition de couplage (1) selon une quelconque des revendications précédentes, **caractérisée en ce que** dans une voie de déplacement admissible entre l'élément de couplage (2, 12) et l'élément de raccordement (3, 13), notamment le premier embout de conduite (3), au moins une barrière est prévue, notamment sous la forme d'une nervure de chicane ou d'une trame.

8. Disposition de couplage (1) selon une quelconque des revendications précédentes, **caractérisée en ce que** l'élément de raccordement (3, 13), notamment le premier embout de conduite (3), est tourné sur paliers mobiles de manière mobile rotative dans l'élément de couplage (2, 12) ou autour de celui-ci.

9. Disposition de couplage (1) selon une quelconque des revendications précédentes, **caractérisée en ce que** le caractère coulissant de l'élément de raccordement (3, 13), notamment du premier embout de conduite (3), est limité face à l'élément de couplage (2, 12) par des butées avants et/ou arrières,

10. Disposition de couplage (1) selon une quelconque des revendications précédentes, **caractérisée en ce que** l'élément de raccordement (3, 13), notamment le premier embout de conduite (3), est tourné sur paliers mobiles dans une articulation constituée par l'élément de couplage (2, 12).

11. Disposition de couplage (1) selon la revendication 10, **caractérisée en ce que** l'élément de couplage (2, 12) constitue un coussinet à rotule pour une sphère constituée par l'élément de raccordement (3, 13), notamment le premier embout de conduite (3).

12. Disposition de couplage (1) selon une quelconque des revendications précédentes, **caractérisée en ce que** l'élément de couplage (2, 12) et l'élément de raccordement (3, 13), notamment au moins le premier embout de conduite (3) sont constitués par les matières plastiques qui sont inertes chimiquement par rapport face au fluide respectif à transporter en eux.

13. Disposition de couplage (1) selon la revendication 12, **caractérisée en ce que** le plastique est un duroplastique et/ou un thermoplastique et notamment du polysulfure de phénylène, du polypropylène, du poly-1-butylène, du chlorure de polyvinyle, du chlorure de polyvinylidène, du polyméthacrylate de méthyle, du polyacrylonitrile, du polystyrène, du polyacétal, de l'alcool polyvinylique, du polyacétate de vinyle, des ionoméres, du plastique fluoré, du polyéthylène, du polyamide, notamment un polyamide aromatique partiel, du polycarbonate, du polyester, du polyphénylène oxyde, du polysulfone, de l'acétal polyvinylique, du polyuréthane, et du polyéther chloré, du nitrate de cellulose, de l'acétate de cellulose, de l'éther de cellulose, de la résine phénolique, de la résine d'urée, de la résine thio-urée, de la résine de mélamine, de la résine alkyde, de la résine allylique, de la silicone, du polyimide, du polybenzimidazole, de la résine époxy, du plastique à la caséine, du polyuréthane réticulé, de la résine polyester non saturée, des combinaisons de ceux-ci et des produits similaires.

14. Disposition de couplage (1) selon les revendications 12 ou 13, **caractérisée en ce qu'**au moins une des matières plastiques est sélectionnée de manière à ce qu'elle est inerte contre une sollicitation aux chocs thermiques par un fluide.

15. Disposition de couplage (1) selon une quelconque des revendications précédentes, **caractérisée en ce que** le plastique qui constitue un élément de raccordement (3, 13) ou un embout de conduite (3) exposé aux températures variables d'un fluide, soit supporte des tensions thermiques, soit présente des éléments destinés à la compensation d'extensions de longueur du plastique suite à une température accrue dans la zone de l'embout de conduite (3).

16. Disposition de couplage (1) selon une quelconque des revendications précédentes, **caractérisée en ce qu'**au moins une des matières plastiques est sélectionnée de manière à ce qu'elle est inerte contre une sollicitation aux variations de pression dans au moins un des premiers embouts de conduite (3).

17. Disposition de couplage (1) selon une quelconque des revendications précédentes, **caractérisée en ce que** l'élément de raccordement (3, 13), notamment au moins un embout de conduite (3) est constitué sur sa face extérieure au moins par zone par un plastique, qui est inerte contre une sollicitation thermique, de pression, ou de rayonnement ou contre une substance chimique agressive.

18. Disposition de couplage (1) selon une quelconque des revendications précédentes, **caractérisée en ce que** l'élément de couplage (2, 12) et l'élément de raccordement (3, 13) notamment le premier embout de conduite (3) sont raccordables l'un avec l'autre mécaniquement, par adhérence et/ou par collage.

19. Procédé de moulage par injection en vue de la fabrication d'un élément de construction selon une quelconque des revendications 1 à 18,

20. Procédé de moulage par injection selon la revendication 19, **caractérisé en ce que** le procédé de moulage par injection à plusieurs composants est réalisé sure une presse d'injection à un composant,

21. Procédé de moulage par injection selon les revendications 19 ou 20, **caractérisé en ce que** lors d'une seule étape de procédé, au moins deux matériaux en plastique pour l'essentiel incombinables entre eux sont coulés dans un moule de moulage par injection sur leurs surfaces entrant en contact l'une avec l'autre.

22. Procédé de moulage par injection selon une quelconque des revendications 19 à 21, **caractérisé en ce que** l'incombinabilité est atteinte pour l'essentiel par l'ajustage des températures sur les surfaces des matériaux en plastique, par l'emploi d'un agent séparateur et/ou l'apport d'un réfrigérant et/ou par l'application d'une couche isolante et/ou par l'utilisation de matériaux différents.

23. Procédé de moulage par injection selon une quelconque des revendications 19 à 22, **caractérisé en ce que** lors d'une seule étape de procédé, au moins deux plastiques sont traités dans un moule de moulage par injection.
